Europäisches Patentamt

European Patent Office

Office européen des brevets

(18)

(11) Publication number: **0 107 060**
**B1**

(12)

# EUROPEAN PATENT SPECIFICATION

(45) Date of publication of patent specification: **17.11.88**

(51) Int. Cl.⁴: **F 16 H 37/02** // F16H3/08

(21) Application number: **83109534.4**

(22) Date of filing: **24.09.83**

(54) **Chain driven reverse gear for a manual transmission.**

(30) Priority: **28.09.82 US 425826**

(43) Date of publication of application:
**02.05.84 Bulletin 84/18**

(45) Publication of the grant of the patent:
**17.11.88 Bulletin 88/46**

(84) Designated Contracting States:
**DE FR GB IT SE**

(56) References cited:
EP-A-0 035 223
DE-B-1 037 278
FR-A-2 216 139
US-A-2 039 665
US-A-2 314 549
US-A-4 337 675

AUTOMOTIVE ENGINEERING, vol. 89, no. 10,
October 1981, Dallas, Texas, US; "Five-speed
OD box boosts efficiency".

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD MOTOR COMPANY LIMITED**
**Eagle Way**
**Brentwood Essex CM13 3BW (GB)**
(84) **GB**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(73) Proprietor: **Ford Motor Company**
**One Parklane Boulevard Parklane Towers East**
**Dearborn Michigan 48126 (US)**
(84) **IT SE**

(72) Inventor: **Janson, David A.**
**255 Garling Drive**
**Plymouth Michigan 48170 (US)**

(74) Representative: **Ritzkowsky, Harald, Dipl.-Ing.**
**et al**
**Ford-Werke Aktiengesellschaft Patentabteilung**
**Z/DRR-2 Ottoplatz 2**
**D-5000 Köln 21 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The invention refers to a multiple speed ratio manual transmission according to the pre-characterizing part of claim 1, known from US—A—4,337,675.

From US—A—4,337,675 there is known a five-speed counter-shaft transmission that includes a countershaft, fifth speed gear journalled on the countershaft, a synchronizer for engaging said gear, a shift fork, a fifth speed gear mating with the first mentioned gear and mounted on an output shaft and a reverse idler gear arrangement.

Manual transmissions generally require a reverse idler gear that is moved along the axis of its supporting shaft into meshing engagement with a reverse drive pinion and a reverse output gear through the action of the shift mechanism whose motion is controlled by the vehicle operator. Generally reverse drive is produced by a shift mechanism which includes a reverse motion bell crank that transmits shifting motion of a shift selector shaft to the reverse idler in a direction that is opposite from that applied to the shift selector shaft. This reverse motion mechanism is required in order to maintain the conventional shifting pattern through which the shift selector shaft is moved where the reverse idler must be moved in a direction opposite to that produced by the standard direction of the gear selector. Where the reverse motion mechanism and reverse idler gear are required, the transmission casing must have an enlarged space to accommodate the additional parts required, particularly for the reverse idler and its supporting shaft. The reverse shift mechanism of this type requires necessarily a greater number of parts than would be required if the reverse idler were absent or if the reverse motion mechanism were not necessary.

Transmissions as disclosed in US—Patents 2 039 665 and 2 314 549 solve some of these problems by using a chain drive to establish reverse speed.

By avoiding the need to move a reverse idler on its supporting shaft the number of shift mechanism parts and its complexity is reduced but the used dog clutch on the output shaft is unacceptable for a present days transmission.

From US—A—2,314,549 there is known a combination of a reducing and a reversing drive unit with only one reduced forward speed and one reverse speed the torque path of which is formed by a sprocket wheel on the input shaft and a sprocket wheel on the output shaft which are engaged with each other by an endless chain.

From US—A—2,039,665 there is known a reversing transmission with only one forward speed and one reverse speed whereby a first sprocket wheel is loosely arranged on the input shaft and a second sprocket wheel is fastened to a countershaft and both sprocket wheels are engaged with each other by an endless chain. On the countershaft there is arranged a first gear which is in mesh with a second gear fixed to an output shaft. On the input shaft, the free end of which is journalled within the second gear fastened to the output shaft there is arranged a coupler means in form of a dog-teeth clutch to selectively operate the transmission in the forward or in the reverse speed.

The object of the invention is to provide a five-speed countershaft transmission with a simplified torque path for the reverse speed which enables a simpler arrangement of the drive ratio selection mechanism.

According to the invention this object is solved by a particular combination of a five-speed countershaft transmission of the first mentioned kind with a special arrangement of a sprocket wheel-chain torque path for the reverse speed as it is disclosed in the characterizing part of claim 1.

The reverse drive of the torque delivery path according to this invention eliminates the need for the conventional reverse idler gear, its supporting stub shaft, provision for support of the stub shaft on the transmission casing and the need for a reverse motion shift mechanism usually required to produce the conventional shifting pattern among the forward and reverse gear ratios. The chain or belt-driven sprockets, used to produce the reverse drive ratio are available at lower cost than the three gears that are normally part of the reverse drive gearset.

The dependent claims 1 and 2 contain particular suitable features for supporting the synchronizer clutch means and for journalling the second gear of the gear pair.

Figure 1 is a side elevation view, partially in cross section taken at a plane passing through the output shaft and the countershaft of a manual transmission according to the present invention.

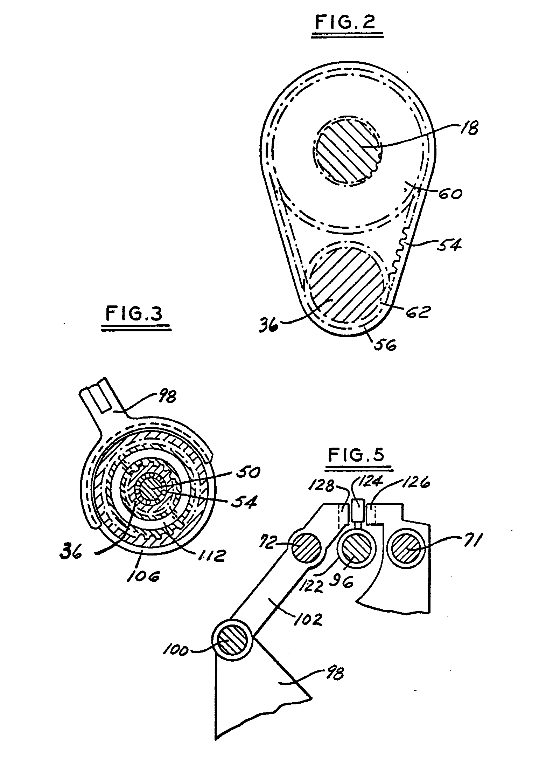

Figure 2 is a cross section taken at plane II—II of Figure 1.

Figure 3 is a cross section taken at plane III—III of Figure 1.

Figure 4 is a top view of the gear select mechanism of the transmission shown in Figure 1.

Figure 5 is a partial side elevation view of the shift mechanism shown in Figures 1 and 4.

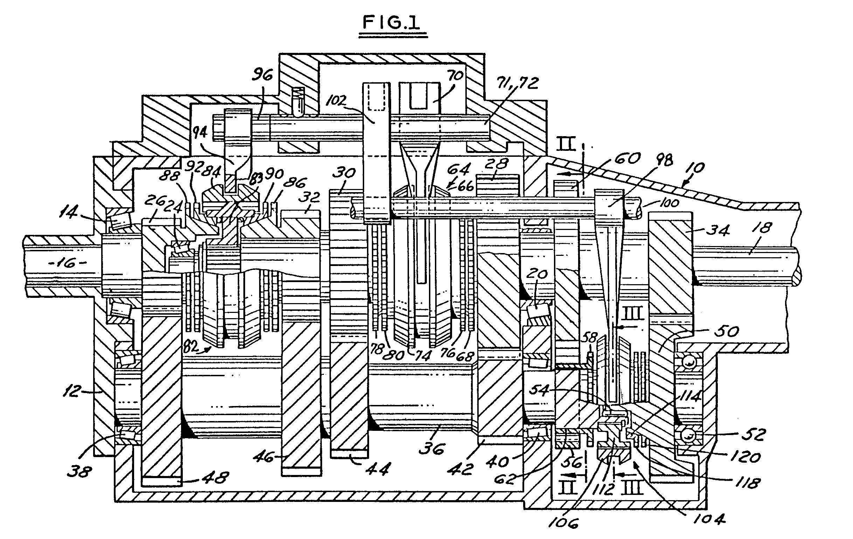

Turning first to Figure 1 for a more detailed description of the invention, a transmission housing 10 containing torque transmitting and gear ratio selection elements has a forward wall 12 which receives the front bearing 14, upon which the torque input shaft 16 is supported. Shaft 16 is connected to the friction clutch disk of a selectively engageable friction clutch (not shown) through which torque is delivered from the engine. A power output shaft 18 is supported at its forward end in bearing 24 located in the opening formed in the torque input gear 26 which is formed as an integral part of input shaft 16. Output shaft 18 has journalled on its surface a low speed gear 28, a second speed gear 30 and a third speed gear 32.

A countershaft or layshaft 36 has its forward end supported in a bearing 38 and its rearward end in bearing 40. Formed integrally with or secured to countershaft 36 are four gears shown respectively at 42, 44, 46 and 48. These form a portion of the torque delivery paths for operation in the in low speed, second speed and third speed. These gears are in continuous meshing engagement with gears 28, 30, 32 and 26, respectively.

A fifth drive ratio gear (second gear) 50 is supported partially on the transmission housing by way of bearing 52 and partially by bearing 54 that is located within a recess or pocket formed at the rearward end of countershaft 36. Fifth drive ratio gear 50 is in continuous meshing engagement with fifth speed output gear (first gear) 34, which is fixed by a spline to or integrally formed with the output shaft 18.

A reverse drive sprocket (second sprocket) 62 is journalled on the outer surface of countershaft 36 and provides a set of dog teeth 58. A reverse driven sprocket (first sprocket) 60 is splined to the output shaft and aligned axially with reverse drive sprocket 62. The sprockets 60, 62 each have teeth formed on their circumference that are engaged by the links of a flexible, endless chain belt 56.

A 1—2 synchronizer 64 has a clutch sleeve 66 formed with internal clutch teeth that are adapted to engage external dog teeth 68 formed on the low speed gear 28. A 1—2 shift fork 70 fixed to a shift rail 71 engages the recess formed on the outer surface of sleeve 66 whereby the sleeve is moved forward and rearward as the shift selector is moved by the vehicle operator. Blocker ring teeth 76 and the blocker ring on which they are formed synchronize the speed of shaft 18 with that of gear 28 and prevent shifting motion of sleeve 66 into clutching engagement with dog teeth 68 at speeds other than the synchronous speed. When the speed of the output shaft is synchronous with that of gear 28, sleeve 66 is moved rearward to engage dog teeth 68 thereby connecting gear 28 to shaft 18 and establishing low speed ratio operation. When this is accomplished, torque is transmitted from input shaft 16 through main input gear 26 to the cluster gear or countershaft 36, the low speed gears 42, 28 and 1—2 synchronizer 64 to the output shaft 18.

Second speed gear 30 also is adapted to be selectively connected to output shaft 18 through the 1—2 synchronizer clutch mechanism 64. Gear 30 has a set of dog teeth 78 and carries a blocker ring upon which blocker ring teeth 80 are formed. Synchronizer 64 is actuated when sleeve 66 is shifted forward, thereby establishing a second speed ratio as gear 30 is connected to output shaft 18 by synchronizer sleeve 66 being moved into engagement with teeth 78 and 80. Synchronizer 64, in the conventional manner, has a hub member to which sleeve 66 is slidably fixed, the hub being splined to the outer surface of output shaft 18. In the second speed ratio position, torque is delivered to gear 30 from gear 44 of the countershaft 36 with which it is in continuous meshing engagement, and from there to output shaft 18 to which gear 30 is drivably connected by synchronizer 64. When sleeve 66 is shifted to the neutral position, midway between the forward and rear positions, gears 28 and 30 are disconnected from output shaft 18.

A 3—4 synchronizer clutch mechanism 82 includes a synchronizer hub 83, which is splined to the outer surface of output shaft 18, and synchronizer clutch sleeve 84, which has internal teeth adapted to register with external dog teeth 86, 88 formed respectively on third speed gear 32 and input gear 26. Blocker rings supported on a conical surface of gears 32 and 26 have teeth 90, 92 formed on their circumferences, which teeth are engaged by the internal teeth of clutch sleeve 84 when it is moved forward and rearward by the 3—4 shift fork 94 due to motion applied to shift rail 96 by the vehicle operator. To condition synchronizer clutch 82 for third speed ratio operation, sleeve 66 is moved to the neutral position and sleeve 84 is moved rearward, whereby input torque is transmitted from shaft 16 through input gear 26, gears 48 and 46, third speed gear 32, sleeve 84 and through the hub 83 of synchronizer 82 to the output shaft 18. A shift to the fourth speed ratio is achieved by moving synchronizer sleeve 84 forward, thereby connecting input gear 26 directly to output shaft 18 by way of synchronizer mechanism 82.

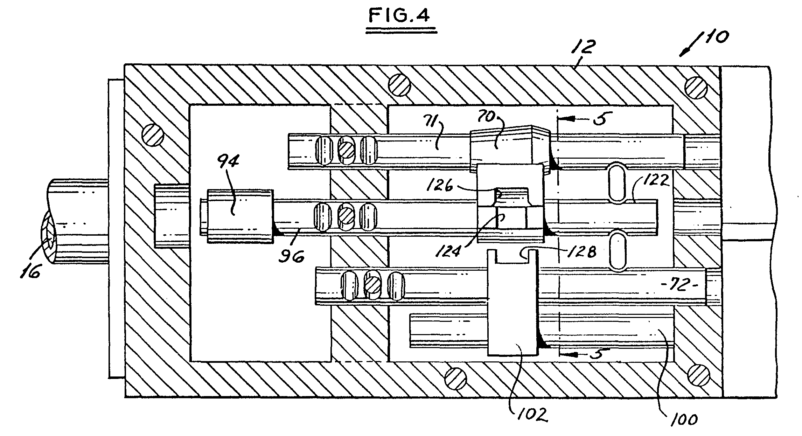

Similarly, the fifth forward speed and reverse drive are effected by movement of a 5-R shift fork 98 carried by shift rail 100 to which motion is transmitted when arm 102 is moved forward and rearward by shifting movement applied to the shift selector by the vehicle operator. It can be seen by comparing Figures 1 and 4 that arm 102 is located in Figure 1 leftward of its true position which is shown in Figure 4. This was done so that synchronizer 64 and fork 70 would not be obstructed as they would be if arm 102 were not relocated. Actually, the notches at the upper ends of fork 70, arm 102 and rail 96 are axially aligned when the shift mechanism is in the neutral position. The 5-R synchronizer clutch means 104 includes a clutch sleeve 106, which has internal teeth by means of which it is drivably connected to the hub 112 of the synchronizer, the hub being splined to the outer surface of countershaft 36. Blocker ring 114 is supported on a conical surface of gear 50, and has dog teeth 118 formed on its circumference. Similarly, fifth speed gear 50 has a set of dog teeth 120 formed on its circumference. Fifth speed ratio is produced when sleeve 106 is moved rearward into engagement with teeth 118 and 120, thereby drivably connecting gear 50 to countershaft 36 by way of sleeve 106 and the hub 112 of synchronizer 104. In the fifth speed ratio condition, torque is transmitted from input gear 26 to countershaft 36 by way of pinion 48 and through the operation of synchronizer 104 to gear 50 and to output shaft 18 by way of fifth gear 34, which is in mesh with pinion 50.

Reverse drive operation is produced when synchronizers 64 and 82 are in their neutral positions and the sleeve of synchronizer 104 is moved forward into engagement with teeth 58. Then sprocket wheel 62 is drivably connected to countershaft 36 through operation of synchronizer 104 and power is transmitted from sprocket wheel 62 to sprocket wheel 60 by the drive chain or belt 54. The torque path for reverse drive operation includes input gear 26, gear 48, synchronizer 104, sprocket wheels 60 and 62 and output shaft 18.

Figures 4 and 5 illustrate one gear selection system that could be used to select the forward and reverse ratios. Alternatively a single rail selection system such as that described in U.S. Patent 4,307,624 could be adapted to this purpose. The 3—4 shift rail 96 carries a sleeve 122 fixed to the rail, which defines a notch 124. Similarly, fork 70 and arm 102 define notches which are aligned axially with notch 124 when the transmission is set in the neutral position. These notches are engaged by a finger that pivots from above the notches on the shift selector (not shown) that is moved by the vehicle operator. Leftward lateral movement of the selector brings the finger into engagement with notch 126 on the 1—2 fork 70, and rightward lateral movement causes the finger to engage notch 128 on the five-reverse arm 102. These are the cross-over planes that define the positions of the shift selector for operation in the forward and reverse drive ratios.

After the selector finger engages the 1—2 fork 70, longitudinal movement of the selector shaft moves sleeve 66 rearward and forward. This action produces first and second drive ratio engagement respectively. With the selector finger engaging notch 124, third and fourth drive ratios result by moving the selector shaft forward and rearward respectively. When the selector finger is brought into engagement with notch 128, the fifth speed ratio and reverse drive are produced by forward and rearward movement of the selector shaft.

## Claims

1. Multiple speed ratio manual transmission comprising an input shaft (16) adapted to be clutched to the crankshaft of an internal combustion engine, the input shaft having an input gear (26) secured thereto, a countershaft (36) having a gear (48) secured thereto in meashing engagement with the input gear (26), gearing defining multiple torque delivery paths including multiple pairs of meshing gears carried by the countershaft and an output shaft (18) for forward drives and a gearing on said shafts for reverse drive and a drive ratio selection mechanism (71, 72, 96) responsive to vehicle operator control having multiple shift forks (70, 94, 98) adapted to move selected synchronizer clutch means to connect a member of said gearings to the shaft to which the associated clutch means is connected whereby selected forward drives and a reverse drive are produced, characterized in that a first gear (34) and a first sprocket wheel (60) both are fixed to the output shaft (18), a second gear (50) is supported at least in part on the countershaft (36) and meshing with the first gear (34), a second sprocket wheel (62) is journalled on the countershaft (36) and a flexible endless drive belt or chain (56) is engaging the sprocket wheels (60, 62) for reverse drive, wherein the countershaft (36) comprises means for supporting a synchronizer clutch means (104) that is adapted to selectively connect to the countershaft (36) both the second sprocket wheel (62) and the second gear (50) by means of the one shift fork (98) and means for rotatably supporting at least partially the second gear (50) on the countershaft (36).

2. A multiple speed ratio manual transmission according to claim 1, characterized in that the means for supporting the synchronizer clutch means (104) includes a splined surface of the countershaft (36) to which a splined hub (112) of the synchronizer clutch means (104) is removeably connected and wherein the means for supporting the second gear (50) includes a first bearing (54) carried by the countershaft (36) and a second bearing (52).

3. A multiple speed ratio manual transmission according to claim 1 and 2, characterized in that the second bearing (52) for supporting the second gear (50) is fitted within the transmission casing (10) at the side of the second gear (50) that is axially opposite to the first bearing (54) located within a recess at the rearward end of the countershaft (36).

## Patentansprüche

1. Handbetätigtes Mehrgang-Wechselgetriebe mit einer Antriebswelle (16) geeignet um mit der Kurbelwelle eines Verbrennungsmotors gekuppelt zu werden, mit einem auf der Antriebswelle befestigten Antriebszahnrad (26), einer Vorgelegewelle (36) auf der ein Zahnrad (48) im Eingriff mit dem Antriebszahnrad (26) befestigt ist, Zahnradsätzen einschliesslich mehrerer ineinander eingreifender von der Vorgelegewelle getragener Zahnradpaare die mehrere Drehmomentübertragungswege definieren, mit einer Antriebswelle (18) für Vorwärtsgänge und einem Zahnradsatz auf diesen Wellen für Rückwärtsgang und mit einem Gangwahlmechanismus (71, 72, 76) ansprechend auf eine vom Fahrer betätigte Schalteinrichtung mit mehreren Schaltgabeln (70, 94, 98), geeignet um mittels der gewählten Synchronkupplung ein Element der genannten Zahnradsätze mit jener Welle zu kuppeln mit der die zugehörige Kupplung verbunden ist wodurch gewählte Vorwärtsgänge und ein Rückwärtsgang eingeschaltet werden, dadurch gekennzeichnet, dass sowohl ein erstes Zahnrad (34) als auch ein erstes Kettenrad (60) auf der Abtriebswelle (18) befestigt sind, ein zweites Zahnrad (50) mindestens teilweise von der Vorgelegewelle (36) getragen wird und in das erste Zahnrad (34) eingreift, ein zweites Kettenrad (62) auf der Vorgelegewelle (36) gelagert ist und ein biegsamer endloser Treibriemen oder eine Treibkette (56) für den Rückwärtsgang in die Kettenräder (60, 62) eingreift, wobei die Vorgelegewelle (36) mit Mitteln versehen ist welche eine Synchronkupplung (104) tragen die zur wahlweisen Verbindung sowohl des zweiten Kettenrads (62) als auch des zweiten Zahnrads (50) mit der Vorgelegewelle (36) mittels einer der Schaltgabeln (98) bestimmt ist und Mittel aufweist die das zweite Zahnrad (50) drehbar mindestens teilweise auf der Vorgelegewelle (36) lagern.

2. Handbetätigtes Mehrgang-Wechselgetriebe gemäss Anspruch 1, dadurch gekennzeichnet, dass die Mittel welche die Synchronkupplung (104) tragen eine keilverzahnte Oberfläche der Vorgelegewelle (36) aufweisen mit der eine keilverzahnte Nabe (112) der Synchronkupplung (104) lösbar verbunden ist und die Mittel die das zweite Zahnrad (50) tragen ein von der Vorgelegewelle (36) getragenes erstes Lager (54) und ein zweites Lager (52) aufweisen.

3. Handbetätigtes Mehrfach-Wechselgetriebe gemäss Anspruch 1 und 2, dadurch gekennzeichnet, dass das zweite Lager (52), welches das zweite Zahnrad (50) trägt, innerhalb des Getriebegehäuses (10) an der dem ersten Lager (54) axial gegenüberliegenden Seite des zweiten Zahnrads (50) in einer Aussparung beim Hinterende der Vorgelegewelle (36) angeordnet ist.

## Revendications

1. Boîte de vitesses manuelle à rapports de vitesses multiples, comprenant un arbre d'entrée (16) adapté pour être accouplé au vilebrequin d'un moteur à combustion interne, l'arbre d'entrée portant un pignon d'entrée (26) fixé sur lui, un arbre intermédiaire (36) portant un pignon (48) fixé sur lui et en prise avec le pignon d'entrée (26), une pignonnerie définissant des chaînes cinématiques multiples et qui comprend des paires multiples de pignons en prise portés par l'arbre intermédiaire et par l'arbre de sortie (18) pour les entraînements en marche avant et une pignonnerie portée par les arbres pour l'entraînement en marche arrière, et un mécanisme de sélection du rapport (71, 72, 96) qui répond à la commande du conducteur du véhicule et qui possède plusieurs fourchettes de passage (70, 94, 98) adaptées pour déplacer des moyens d'accouplement à synchroniseur sélectionnés pour accoupler un élément desdites pignonneries à l'arbre auquel les moyens d'accouplement associés sont accouplés, ce qui sélectionne et produit les entraînements en marche avant et l'entraînement en marche arrière qui sont sélectionnés, caractérisée en ce qu'un premier pignon (34) et une première roue dentée (60) sont tous deux fixés à l'arbre de sortie (18), un deuxième pignon (50) est supporté au moins en partie par l'arbre intermédiaire (36) et est en prise avec le premier pignon (34), une deuxième roue dentée (62) est tourillonnée sur l'arbre intermédiaire (36) et une courroie ou chaîne de transmission flexible sans fin (56) est en prise avec les roues dentées (60, 62) pour la marche arrière, l'arbre intermédiaire (36) comprenant des moyens servant à supporter des moyens d'accouplement à synchroniseur (104) qui sont adaptés pour accoupler sélectivement à l'arbre intermédiaire (36) la deuxième roue dentée (62) et le deuxième pignon (50) au moyen de la première fourchette de passage (98), et des moyens qui supportent en rotation, au moins partiellement le deuxième pignon (50) sur l'arbre intermédiaire (36).

2. Boîte de vitesses manuelle à rapports de vitesses multiples selon la revendication 1, caractérisée en ce que des moyens servant à supporter les moyens d'accouplement à synchroniseur (104) comprennent une surface cannelée de l'arbre intermédiaire (36) à laquelle un moyeu cannelé (112) des moyens d'accouplement à synchroniseur (104) est accouplée de façon amovible, les moyens servant à supporter le deuxième pignon (50) comprennent un premier palier (54) porté par l'arbre intermédiaire (36) et un deuxième palier (52).

3. Boîte de vitesses manuelle à rapports de vitesses multiples selon les revendications 1 et 2, caractérisée en ce que le deuxième palier (52) servant à supporter le deuxième pignon (50) est monté dans le carter de la boîte de vitesses (10), sur le côté du deuxième pignon (50) qui est axialement à l'opposé du premier palier (54) logé dans un évidement prévu à l'extrémité arrière de l'arbre intermédiaire (36).

FIG.1

FIG.2

FIG.3

FIG.5

FIG.4